# EUROPÄISCHE PATENTSCHRIFT

(11) **EP 0 779 204 B1**
(45) Veröffentlichungstag und Bekanntmachung des Hinweises auf die Patenterteilung: **03.11.1999**
(21) Anmeldenummer: 96119781.1
(22) Anmeldetag: 10.12.1996
(51) Int. Cl.: B62D 65/00, B62D 3/12, B60T 17/04, B60T 8/00, B62D 5/06

(54) **Hilfsrahmen mit einem Leichtmetall-Gussgehäuse einer Zahnstangenlenkung**
Subframe comprising the cast light-alloy housing of a rack-and-pinion steering
Châssis auxiliaire comprenant le boîtier en fonte d'alliage léger d'une direction à crémaillère

(30) Priorität: 11.12.1995 DE 19546120
(43) Veröffentlichungstag der Anmeldung: 18.06.1997
(73) Patentinhaber: Volkswagen Aktiengesellschaft, 38436 Wolfsburg (DE)
(72) Erfinder: Dau, Wolfram, 38444 Wolfsburg (DE)

(56) Entgegenhaltungen:
- EP-A- 0 133 003
- EP-A- 0 256 931
- WO-A-90/05083
- WO-A-92/12887
- DE-B- 2 020 675
- DE-C- 4 041 016
- FR-A- 2 474 985
- FR-A- 2 615 458
- US-A- 3 958 653
- US-A- 4 060 011

## Beschreibung

Die Erfindung betrifft einen Hilfsrahmen mit einem Leichtmetall-Gußgehäuse einer Zahnstangenlenkung nach dem Oberbegriff des Anspruchs 1 für Kraftfahrzeuge.

Hilfsrahmen an Kraftfahrzeugen sind bekannt. Es ist auch bekannt, das Leichtmetall-Gußgehäuse einer Zahnstangenlenkung mit einem Hilfsrahmen zu verbinden. Überdies ist es aus der WO 90/05083 bekannt, das Leichtmetall-Gußgehäuse und den Hilfsrahmen als einstückige Baueinheit aus Leichtmetallguß auszubilden, indem das Leichtmetall-Gußgehäuse durch entlang seinem Umfang und seiner Länge angegossene rippen-, steg- und/oder gurtartige Versteifungen verstärkt und durch konsolartige seitliche Angüsse mit Lagern zur schwenkbaren Anlenkung von Radführungslenkern, insbesondere dreieckförmigen Quer- und Schräglenkern, sowie mit Lagern zur lösbaren Befestigung, insbesondere Anschraubung der Baueinheit am Fahrzeugaufbau, versehen ist. Die Versteifung in der Längsausdehnung des Zahnstangengehäuses kann dabei T-, U- oder doppel-T-förmig ausgebildet sein und bis in die seitlich abgespreizten konsolartigen Angüsse hineinreichen.

Die US 5082077 hat eine Zahnstangenlenkung mit einem Gehäuse zur Anordnung an einem Rahmen oder am Fahrzeugaufbau mit einem Gehäuse zum Gegenstand, an dem Radaufhängungselemente gelenkig angeordnet und austauschbar sind.

Des weiteren sind aus der DE 4243267 A1 und der DE 4306954 A1 Zahnstangenlenkungen bekannt geworden, bei denen in derem Gußgehäuse eine Servolenkung integriert ist, was zu einer kompakten Bauweise beiträgt. Bekannt ist aus der EP 0343549 A2 ein Lenkgetriebe für Kraftfahrzeuge mit einem Lenkspindelgehäuse, an dem ein Lenkschubstangengehäuse angeordnet ist und die beiden Gehäuse als kompakte Einheit und zum Zwecke des Leichtbaus und einer rationellen Fertigung einstückig ausgebildet und aus Kunststoff gefertigt sind. An dem Lenkschubstangengehäuse sind Anschlagflächen und Rippen angeformt.

Ferner sei noch die DE-OS 2253332 erwähnt, die die Anordnung eines Lenkgetriebes, vorzugsweise eines Zahnstangenlenkgetriebes an der Spritzwand im Motorraum eines Kraftfahrzeugs zum Gegenstand hat, bei dem das Lenkgetriebegehäuse zum Zwecke einer Raumersparnis und einer schalldämmenden Anordnung mit einem das Lenkritzel umfassenden Dichtungsflansch an der Spritzwand befestigt ist und in dem im Bereich des Lenkritzels ein Widerlager für den Führungsmantel des Kupplungsseiles integriert ist.

Obwohl die Lösungen, insbesondere die eingangs beschriebene, Beiträge in Richtung einer kompakteren Bauweise und zur Raumersparnis und Kosteneinsparung darstellen, bleiben hinsichtlich dieser Aspekte Wünsche offen.

Es ist deshalb Aufgabe der Erfindung, einen Hilfsrahmen mit einem Leichtmetall-Gußgehäuse einer Zahnstangenlenkung nach dem Oberbegriff des Anspruchs 1 zu schaffen, die eine bessere Raumausnutzung des Motorraumes, Kosten- und Gewichtseinsparungen und auch eine Qualitätserhöhung ermöglicht.

Diese Aufgabe wird bei einem Hilfsrahmen nach dem Oberbegriff des Anspruchs 1 durch dessen kennzeichnende Merkmale gelöst. Danach ist vorgesehen, daß der Hilfsrahmen, der aus einem Leichtmetall-Gußgehäuse einer Zahnstangenlenkung und an diesem angeordneten konsolartigen seitlichen Befestigungsarmen mit Lagern zur lösbaren Anordnung an einem Fahrzeugaufbau und mit Halterungsarmen mit Lagern zur schwenkbaren Anlenkung von Radführungslenkern gebildet ist, und bei dem der Hilfsrahmen als Anordnungsmodul für weitere Aggregate und/ oder Aggregateteile dient, als Montagemodul mit definierten Anschlußstellen für die Aggregate und/ oder Aggregateteile ausgebildet ist, wobei der Hilfsrahmen Träger der vorderen Bremsdruckleitungen und der Bremsdruckschläuche ist, und die Bremsdruckleitungen so angeordnet sind, daß deren bremszylinderseitiger Anschluß mit dem montierten Hilfsrahmen in einem vorbestimmten Montageabstand vom Hauptbremszylinder gegeben ist, und daß deren radseitiges Ende an einem Halterungselement am jeweiligen Befestigungsarm fixiert ist, welches zugleich Anschlußelement für den jeweiligen Bremsdruckschlauch ist.

Dadurch ergibt sich der besondere Vorteil, daß die vorgesehenen Anordnungen einheitlich definiert vormontiert werden können, was zwar hinsichtlich der Fertigung des Hilfsrahmens mit mehr Aufwand, jedoch bei der Fahrzeugfertigung insgesamt mit erheblichen Fertigungseinsparungen, insbesondere Kosteneinsparungen verbunden ist. Darüber hinaus ergibt sich eine bessere Motorraumnutzung, indem Aggregate und/ oder Aggregateteile in dem bisher schlechter genutzten unteren Motorraumbereich angeordnet werden können und die Packungsdichte im oberen Motorraumbereich verringert werden kann, was nicht zuletzt die Servicefreundlichkeit erhöht. Überdies trägt eine derartig kompakte Bauweise zur Qualitätssteigerung bei.

Der Hilfsrahmen kann außerdem Anordnungsmodul für ein ABS-Gerät und der mit diesem verbundenen Bremsdruckleitungen sein. Das ABS-Gerät kann an beliebiger Stelle am Leichtmetall-Gußgehäuse der Zahnstangenlenkung plazierbar sein. Im Hinblick auf eine Qualitäts- und Stabilitätsverbesserung und Fertigungsrationalisierung kann das ABS-Gerät-Gehäuse einstückig mit dem Leichtmetall-Gußgehäuse verbunden sein. Diese Maßnahme ist überdies mit Gewichts- und Kosteneinsparungen verbunden.

Der Hilfsrahmen kann Anordnungsmodul für die Antriebsteile einer Servolenkung sein, wobei es insbesondere vorteilhaft ist, das Pumpengehäuse einer elektro-hydraulischen oder das Antriebsgehäuse einer elektro-mechanischen Servolenkung einstückig mit dem Leichtmetall-Gußgehäuse des Hilfsrahmens zu verbinden. Auch dadurch ergeben sich Gewichts- und Kosteneinsparungen. Das Leichtmetall-Gußgehäuse kann zum Zwecke der Stabilitätserhöhung in seiner Längsrichtung, also in Richtung der Zahnstange versteift sein. Vorteilhaft ist eine Versteifung mit U-förmigem Profilquerschnitt, weil bei diesen der Schubmittelpunkt außerhalb des Profilquerschnitts liegt und damit eine größere Quersteifigkeit zwischen Querlenkeranlenkstellen gegeben ist, die gegenüberliegend an den am Leichtmetall-Gußgehäuse angeordneten Halterungsarmen ausgebildet sind. Schließlich können die Halterungs- und Befestigungsarme aus einem gegenüber dem Leichtmetall-Gußgehäuse unterschiedlichen Material gefertigt sein, um eine bewußt unterschiedliche Duktilität zu erzielen. Der Leichtmetallgehäuse-Teil des Hilfsrahmens mit dem Lenkgetriebe und den gegebenenfalls integrierten Aggregaten braucht nicht so duktil wie die Halterungs- und Befestigungsarme zu sein und wird gußtechnisch einfacher. Damit können diese auch als Blechkonstruktion ausgeführt sein.

Insgesamt ist ein Montagemodul geschaffen, das nicht allein Träger für viele Komponenten sein kann, sondern bei dem diese Komponenten definiert fixierbar sind, und das vor der Montage in relativ einfacher Weise geprüft werden kann.

Die Erfindung wird nachstehend anhand von Ausführungsbeispielen erläutert. In den zugehörigen Zeichnungen zeigen:
- Fig. 1:: einen erfindungsgemäßen Hilfsrahmen mit U-profil-förmiger Versteifung des Leichtmetall-Gußgehäuses und angeschraubten Halterungsarmen für die Ouerlenker in Vorderansicht,
- Fig. 2:: einen Profilschnitt II-II durch das Leichtmetall-Gußgehäuse,
- Fig. 3:: eine Draufsicht auf den Hilfsrahmen,
- Fig. 4:: einen erfindungsgemäßen Hilfsrahmen mit Bremsdruckleitungen und - schläuchen in Vorderansicht,
- Fig. 5:: einen erfindungsgemäßen Hilfsrahmen mit Bremsdruckleitungen und ABS-Gerät in Vorderansicht,
- Fig. 6:: diesen Hilfsrahmen in Draufsicht,
- Fig. 7:: einen erfindungsgemäßen Hilfsrahmen mit Bremsdruckleitungen, ABS-Gerät und Servolenkung in Vorderansicht und
- Fig. 8:: diesen Hilfsrahmen in Draufsicht.

Die Zeichnungen zeigen die Aufhängung lenkbarer Räder eines (nicht dargestellten) Kraftfahrzeuges, wobei nur die für das Verständnis der Erfindung notwendigen Einzelheiten der Radaufhängung dargestellt sind.

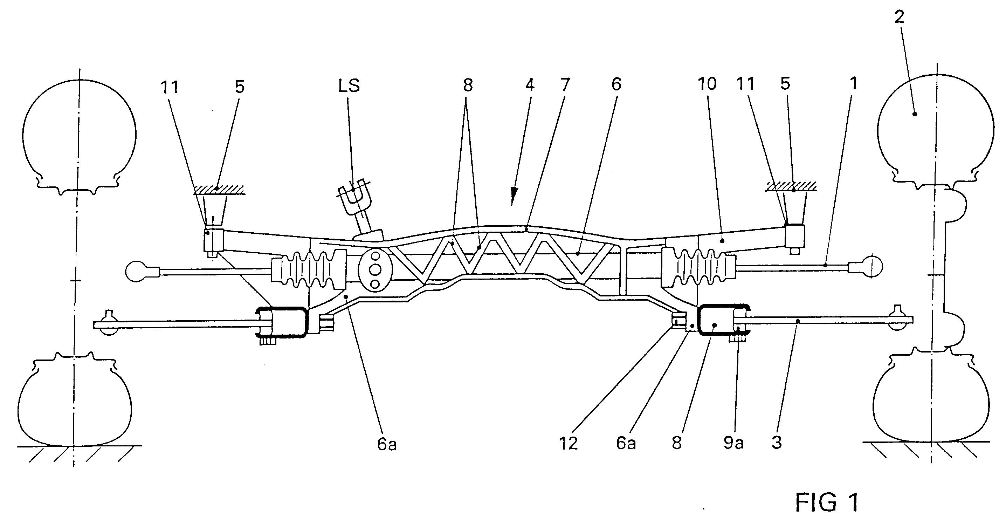

Fig. 1 zeigt über Spurstangen 1 einer Zahnstangenlenkung lenkbare Räder 2 des Kraftfahrzeuges, die jeweils über einen unteren dreieckförmigen Querlenker 3 schwenkbar an einem Hilfsrahmen 4 angelenkt sind, der am nur angedeuteten Fahrzeugaufbau 5 lösbar angeschraubt ist. Weitere notwendige Radführungsglieder, wie ein oberer Querlenker oder ein radführendes Federbein, sowie der Radträger (Achsschenkel) selbst sind wegen der besseren Übersicht nicht dargestellt.

Der Hilfsrahmen 4 weist ein Aluminium-Druckguß-Gehäuse 6 mit einem Eingang für die Lenksäule LS auf, das eine U-profilförmige Versteifung 7 in Gehäuselängsrichtung und schräg zu dieser angeordnete rippenartige Versteifungen 8 aufweist. An den Stirnseiten des Gehäuses 6 sind Ansätze 6a angeformt, an denen Halterungsarme 8 mit Lagern 9 und 9a zur schwenkbaren Anlenkung von Querlenkern 3 und Befestigungsarme 10 mit Lagern 11 zur lösbaren Anordnung des Hilfsrahmens 4 am Fahrzeugaufbau 5 angeschraubt sind, wobei das Lager 9a in bekannter Weise so ausgebildet ist, daß es sowohl zur Befestigung des Hilfsrahmens 4 am Fahrzeugaufbau 5 als auch zur Anlenkung des Querlenkers 3 dient.

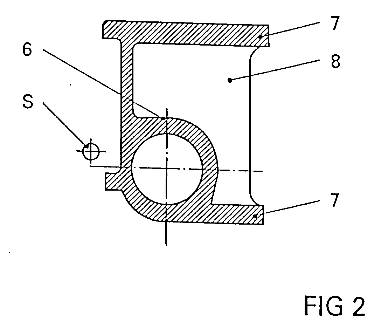

Fig. 2 zeigt einen Profilschnitt II-II durch das Aluminium-Druckguß-Gehäuse 6 mit angedeutetem, außerhalb des Profilquerschnitts liegendem Schubmittelpunkt S. Das Gehäuse 6 ist in die U-profilförmige Versteifung 7 eingebettet, die die schräg zu dieser angeordneten Versteifungen 8 aufweist.

Die Versteifung 7 ist in Fahrzeugquerrichtung brückenartig in der Weise gewölbt ausgebildet (Fig. 1), daß sie von einem mittigen Bogenscheitelpunkt aus zu den seitlich abgespreizten Halterungs- und Befestigungsarmen 8 und 10 leicht abfallend gebogen verläuft. Diese Wölbung trägt einerseits zur Stabilität des Hilfsrahmens 4 bei und erleichtert es andererseits, z. B. das Rohr einer Abgasanlage oder das Schaltgestänge eines Wechselgetriebs unter den Hilfsrahmen 5 hindurchzuführen.

Durch diese Wölbung bedingt liegt das Gehäuse 6 im U-Profil 7 in den seitlichen Bereichen des Hilfsrahmens 4 mehr in der Mitte zwischen den Schenkeln dieses Profils als in Fig. 2 dargestellt.

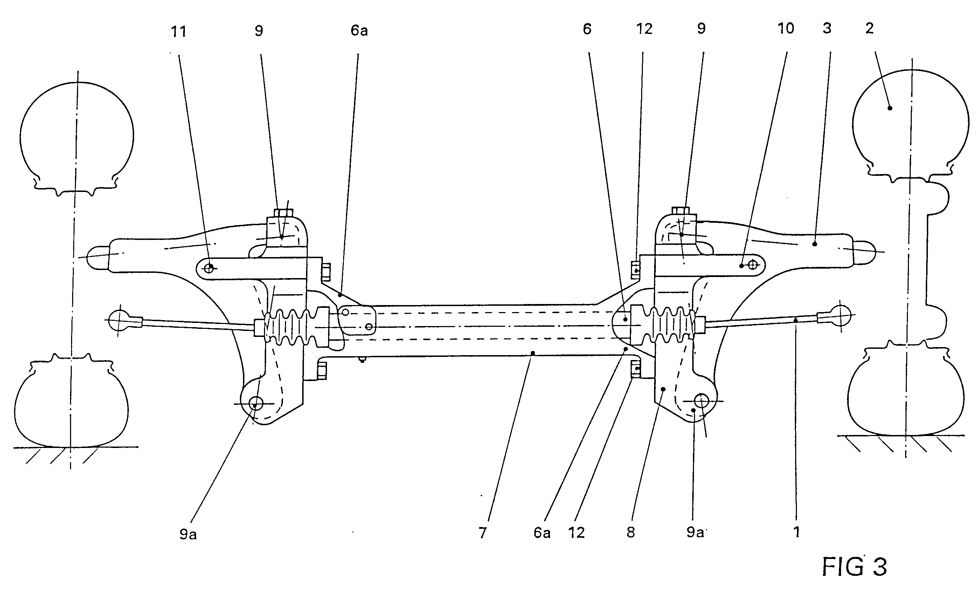

Fig. 3 zeigt in der Draufsicht die Ausbildung und Anordnung der stirnseitigen Ansätze 6a am Gehäuse 6 mit Schraubverbindungsstellen 12 für die als Gußeinheit ausgebildeten Halterungs- und Befestigungsarme 8 und 10 mit der Position der Lager 9 und 9a.

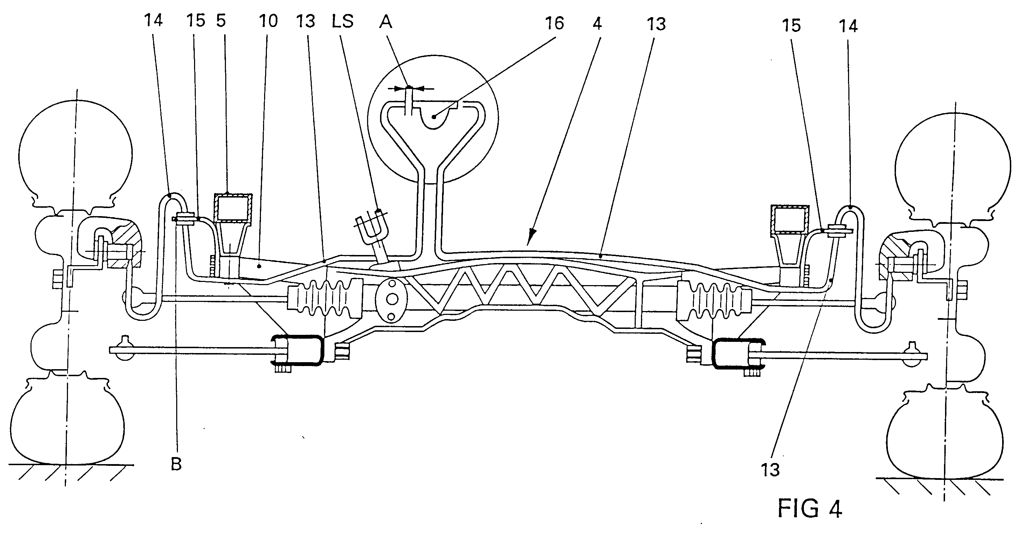

Der erfindungsgemäße Hilfsrahmen 4 ist in einer Ausführung nach Fig. 4 Anordnungsmodul für die vorderen Bremsdruckleitungen 13 und die Bremsdruckschläuche 14. Die radseitigen Enden der Bremsdruckleitungen 13 sind an Halterungen 15, die an den äußeren Enden der Befestigungsarme 10 fest angeordnet sind, befestigt, und die bremszylinderseitigen Enden sind so angeordnet und fixiert, daß sie im montierten Zustand des Hilfsrahmen einen vorbestimmten Montageabstand A zum Hauptbremszylinder 16 haben. Die jeweilige Befestigungsstelle B für die Bremsdruckleitungen 13 ist zugleich Anschlußstelle für die Bremsdruckschläuche 14, die vor der Montage des Hilfsrahmens 4 montierbar sind.

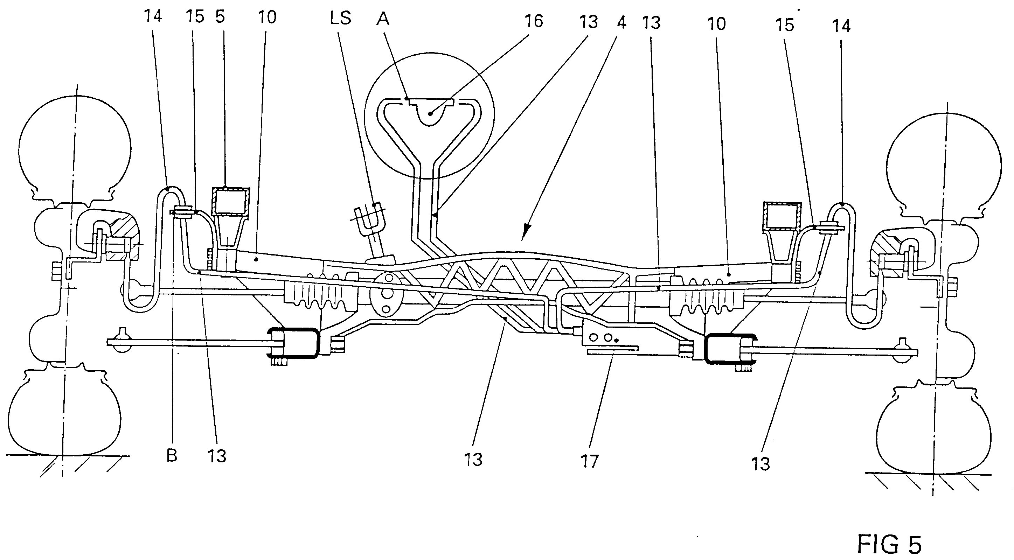

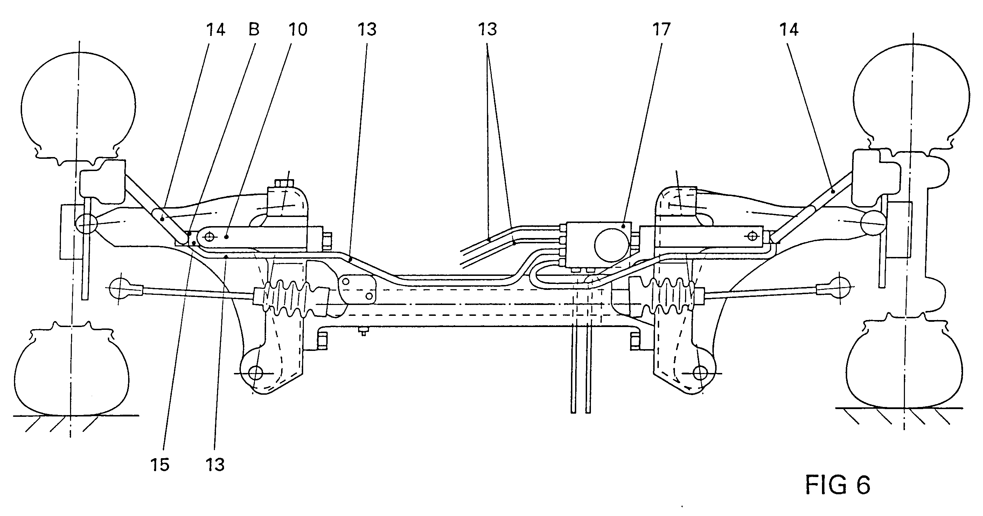

Der erfindungsgemäße Hilfsrahmen 4 ist in einer weiteren Ausführung nach den Figuren 5 und 6 Anordnungsmodul für die vorderen Bremsdruckleitungen 13, ein integriertes ABS-Gerät 17 und die Bremsdruckschläuche 14.

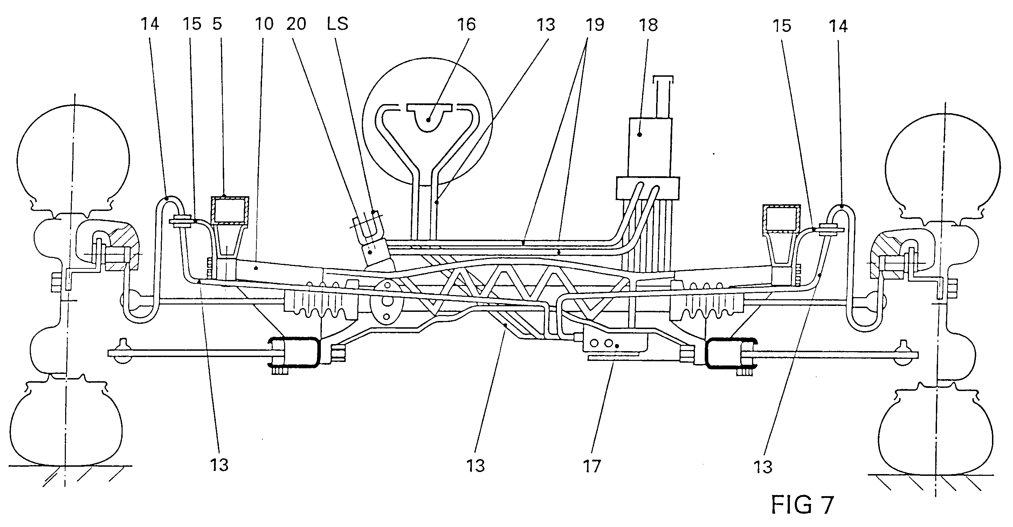

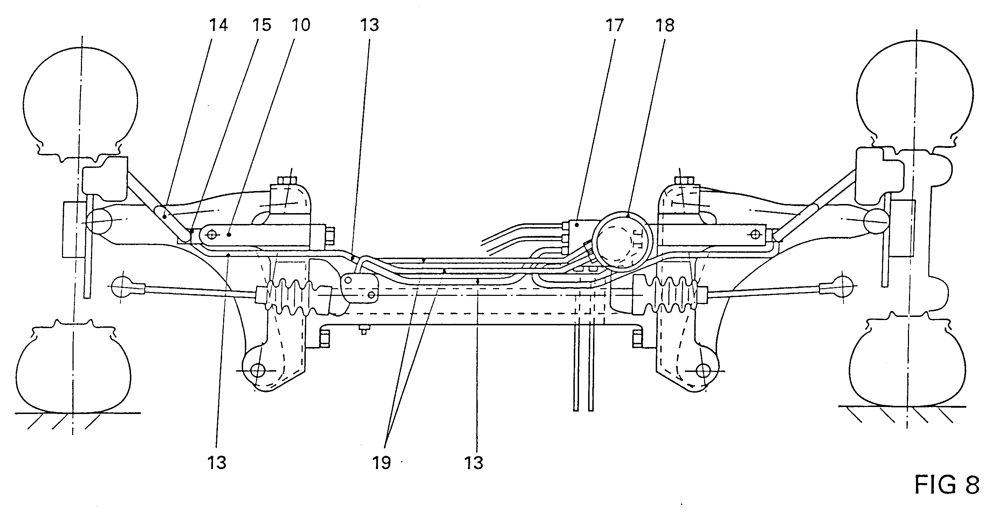

In einer weiteren Ausführung nach den Figuren 7 und 8 ist der Hilfsrahmen 4 Anordnungsmodul für die Bremsdruckleitungen 13, ein integriertes ABS-Gerät 17, die Bremsschläuche 14 und einer Servolenkung, die aus einem elektro-hydraulischen Pumpenaggregat 18, Druckleitungen 19 und einer nicht näher dargestellten Kolbenanordnung 20, die in Wirkverbindung mit der Lenkspindel steht, gebildet ist.

## Patentansprüche

1. Hilfsrahmen (4) mit einem Leichtmetall-Gußgehäuse einer Zahnstangenlenkung und an diesem angeordneten konsolartigen seitlichen Befestigungsarmen (10) mit Lagern (11) zur lösbaren Anordnung an einem Fahrzeugaufbau (5) und Halterungsarmen (8) mit Lagern zur schwenkbaren Anlenkung von Radführungslenkern, wobei der Hilfsrahmen (4) Anordnungsmodul für Aggregate (17; 18) und/ oder Aggregateteile (13; 14) ist, **dadurch gekennzeichnet,** daß der Hilfsrahmen (4) als Montagemodul mit definierten Anschlußstellen der Aggregate und/ oder Aggregateteile ausgebildet ist,
der Hilfsrahmen (4) Träger der vorderen Bremsdruckleitungen (13) und der Bremsdruckschläuche (14) ist, und
die Bremsdruckleitungen (13) so angeordnet sind, daß deren bremszylinderseitiger Anschluß mit dem montierten Hilfsrahmen (4) in einem vorbestimmten Montageabstand (A) vom Hauptbremszylinder (16) gegeben ist, und daß deren radseitiges Ende an einem Halterungselement (15) am jeweiligen Befestigungsarm (10) fixiert ist, das zugleich Anschlußelement für den jeweiligen Bremsdruckschlauch (14) ist.

2. Hilfsrahmen nach Anspruch 1, **dadurch gekennzeichnet,** daß der Hilfsrahmen (4) Träger für ein ABS-Gerät (17) und der mit diesem verbundenen Bremsdruckleitungen (13) ist.

3. Hilfsrahmen nach Anspruch 1 oder 2, **dadurch gekennzeichnet,** daß das ABS-Gerät-Gehäuse (17) einstückig mit dem Leichtmetall-Gußgehäuse (6) der Zahnstangenlenkung verbunden ist.

4. Hilfsrahmen nach Anspruch 1, **dadurch gekennzeichnet,** daß der Hilfsrahmen (4) Träger für das Pumpenaggregat (18) einer elektro-hydraulischen oder der Antriebselemente einer elektro-mechanischen Servolenkung ist.

5. Hilfsrahmen nach Anspruch 4, **dadurch gekennzeichnet,** daß das Pumpengehäuse (18) einstückig mit dem Leichtmetall-Gußgehäuse (6) der Zahnstangenlenkung verbunden ist.

6. Hilfsrahmen nach einem der vorhergehenden Ansprüche, **dadurch gekennzeichnet,** daß das Leichtmetall-Gußgehäuse (6) eine U-profilförmige Versteifung (7) in Gehäuselängsrichtung aufweist.

7. Hilfsrahmen nach einem der vorhergehenden Ansprüche, **dadurch gekennzeichnet,** daß die Befestigungs- und Halterungsarme (10; 8) eine höhere Duktilität aufweisen als das Leichtmetall-Gußgehäuse (6).

8. Hilfsrahmen nach Anspruch 7, **dadurch gekennzeichnet,** daß die Befestigungs- und Halterungsarme (10; 8) als Blechkonstruktion ausgeführt sind.

## Claims

1. Subframe (4) comprising a light-metal cast housing of rack and pinion steering and lateral bracket-like attachment arms (10) disposed thereon having bearings (11) for releasable positioning on a vehicle body (5) and holding arms (8) with bearings for pivotable articulation of wheel control bars, wherein the subframe (4) is a positioning module for assemblies (17; 18) and/or parts of assemblies (13; 14),
characterised in that the subframe (4) is designed as a mounting module with defined connection points for the assemblies and/or parts of assemblies,
the subframe (4) is a support for the front brake pressure lines (13) and the brake pressure hoses (14), and
the brake pressure lines (13) are disposed in such a way that their connection, at the brake cylinder side, to the assembled subframe (4) is set at a predetermined mounting distance (A) from the master brake cylinder (16), and that their end, at the wheel side, is fixed to a holding element (15) on the respective attachment arm (10), which element is also the connection element for the respective brake pressure hose (14).

2. Subframe according to claim 1, characterised in that the subframe (4) is a support for an ABS device (17) and for the brake pressure lines (13) connected thereto.

3. Subframe according to claim 1 or 2, characterised in that the ABS device housing (17) is connected as one piece to the light-metal cast housing (6) of the rack and pinion steering.

4. Subframe according to claim 1, characterised in that the subframe (4) is a support for the pump assembly (18) of electro-hydraulic power steering or the driving elements of electromechanical power steering.

5. Subframe according to claim 4, characterised in that the pump housing (18) is connected as one piece to the light-metal cast housing (6) of the rack and pinion steering.

6. Subframe according to one of the preceding claims, characterised in that the light-metal cast housing (6) has a U-profiled reinforcement (7) in the longitudinal direction of the housing.

7. Subframe according to one of the previous claims, characterised in that the attachment and holding arms (10; 8) have a higher ductility than the light-metal cast housing (6).

8. Subframe according to claim 7, characterised in that the attachment and holding arms (10; 8) are designed as a sheet metal construction.

## Revendications

1. Châssis auxiliaire (4), comportant un boîtier en fonte d'alliage léger d'une direction à crémaillère, et des bras latéraux de fixation (10), situés contre celui-ci en porte-à-faux et comportant des paliers (11) pour une installation détachable contre une carrosserie (5) de véhicule, et des bras de support (8) comportant des paliers pour l'articulation pivotante de bras oscillants de guidage de roues, et dans lequel le châssis auxiliaire (4) sert de module d'installation pour des blocs (17 ; 18) et/ou des éléments de blocs (13 ; 14), **caractérisé en ce que** le châssis auxiliaire (4) est réalisé en tant que module de montage avec des points de raccordement définis pour les blocs et/ou les éléments de blocs, le châssis auxiliaire (4) étant le support des tuyaux d'alimentation de pression de freinage avant (13) et des flexibles de pression de freinage (14), et les tuyaux d'alimentation de pression de freinage (13) étant disposés de telle manière que leur raccordement, du côté cylindre de frein, au châssis auxiliaire (4) monté soit défini à une distance de montage (A) prédéterminée par rapport au cylindre principal de frein (16), et que leur extrémité, du côté roue, soit fixée à un élément de support (15) au niveau du bras de fixation (10) correspondant, qui constitue en même temps un élément de raccordement pour le flexible de pression de freinage (14) correspondant.

2. Châssis auxiliaire selon la revendication 1, **caractérisé en ce que** le châssis auxiliaire (4) est un support pour un dispositif ABS (17) et pour les tuyaux d'alimentation de pression de freinage (13) associés à celui-ci.

3. Châssis auxiliaire selon la revendication 1 ou 2, **caractérisé en ce que** le carter de dispositif ABS (17) est relié d'un seul tenant au boîtier en fonte d'alliage léger (6) de la direction à crémaillère.

4. Châssis auxiliaire selon la revendication 1, **caractérisé en ce que** le châssis auxiliaire (4) est un support pour le bloc formant pompe (18) d'une direction assistée électro-hydraulique ou bien pour les éléments de commande d'une direction assistée électro-mécanique.

5. Châssis auxiliaire selon la revendication 4, **caractérisé en ce que** le carter de pompe (18) est relié d'un seul tenant au boîtier en fonte d'alliage léger (6) de la direction à crémaillère.

6. Châssis auxiliaire selon l'une des revendications précédentes, **caractérisé en ce que** le boîtier en fonte d'alliage léger (6) présente un raidisseur profilé en U (7), dans le sens longitudinal du boîtier.

7. Châssis auxiliaire selon l'une des revendications précédentes, **caractérisé en ce que** les bras de fixation et les bras de support (10 ; 8) présentent une ductilité plus élevée que celle du boîtier en fonte d'alliage léger (6).

8. Châssis auxiliaire selon la revendication 7, **caractérisé en ce que** les bras de fixation et les bras de support (10 ; 8) sont réalisés en tant que construction en tôle.
